Europäisches Patentamt

**European Patent Office**

**Office européen des brevets**

(11) Veröffentlichungsnummer: **0 159 608**
**A2**

(12) **EUROPÄISCHE PATENTANMELDUNG**

(21) Anmeldenummer: **85104222.6**

(22) Anmeldetag: **06.04.85**

(51) Int. Cl.⁴: **G 06 K 7/10**

(30) Priorität: **07.04.84 DE 3413288**

(43) Veröffentlichungstag der Anmeldung: **30.10.85**
**Patentblatt 85/44**

(84) Benannte Vertragsstaaten: **AT BE CH DE FR GB IT LI NL SE**

(71) Anmelder: **Gebhardt Fördertechnik GmbH, Postfach 304, D-6920 Sinsheim (DE)**

(72) Erfinder: **Thomas, Frank, Dr., Brunhildenstrasse 3, D-7500 Karlsruhe (DE)**
Erfinder: **Rummert, Thomas, Dr., Brahmsstrasse 6, D-7500 Karlsruhe (DE)**
Erfinder: **Warmuila, Karl F., Dipl.-Ing., Stösser Strasse 5, D-7500 Karlsruhe (DE)**

(74) Vertreter: **Neugebauer, Bernhard, Tölzer Strasse 7, D-7100 Heilbronn (DE)**

(54) Vorrichtung zum automatischen Lesen von Informationen auf bewegten Gegenständen.

(57) Die Erfindung betrifft eine Vorrichtung zum automatischen Lesen von auf einem Codeträger aufgebrachten Informationen auf bewegten Gegenständen, insbesondere auf Stückgut, mittels eines an ein Auswertesystem angeschlossenen Bildwandlers, durch dessen Aufnahmefeld der auf dem Gegenstand angeordnete Codeträger in beliebiger Drehwinkel- und Breitenlage sowie in begrenztem Bereich beliebiger Höhen- und Schräglage bewegt wird. Eine derartige Vorrichtung soll derart verbessert werden, daß auf einfache Weise eine hohe Auswertgeschwindigkeit und hohe Auswertgenauigkeit erreicht werden. Gelöst wird diese Aufgabe dadurch, daß als Bildwandler ein linearer Halbleitersensor mit einer Vielzahl von Fotoelementen in einem schmalen, sich quer zur Bewegungsrichtung des Gegenstandes erstreckenden, linienförmigen Aufnahmefeld vorgesehen ist und der Codeträger einen optisch aktiven Belag aufweist.

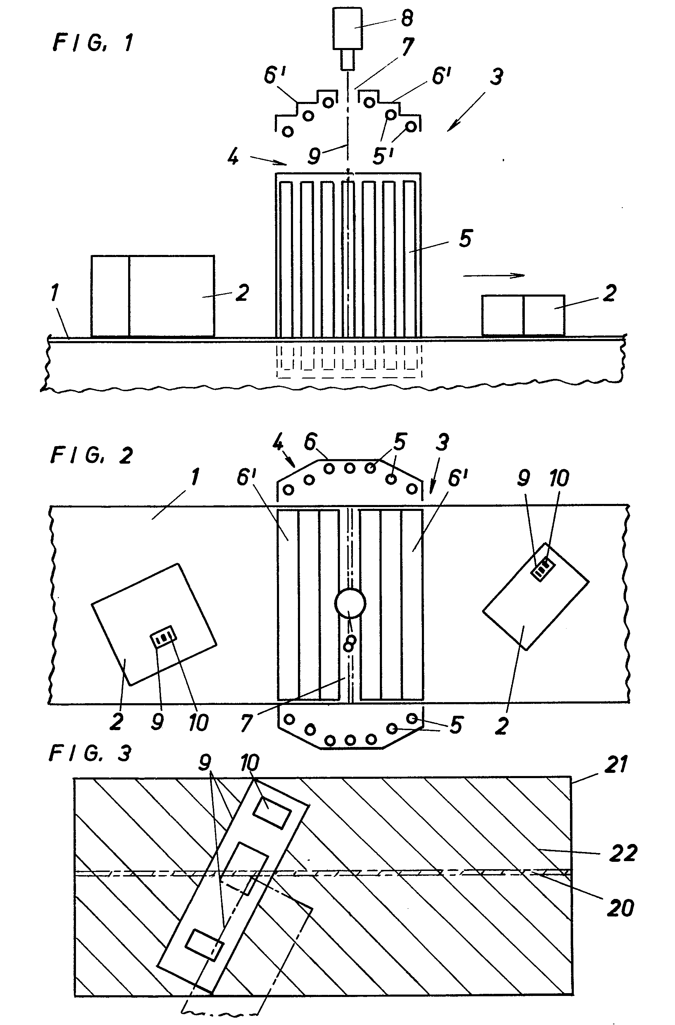

Eine umfassende Darstellung der Erfindung ist der Fig. 1 zu entnehmen.

0159608

Vorrichtung zum automatischen Lesen von
Informationen auf bewegten Gegenständen

Die Erfindung betrifft eine Vorrichtung zum automatischen Lesen von auf einem Codeträger aufgebrachten Informationen auf bewegten Gegenständen, insbesondere auf Stückgut, mittels eines an ein Auswertesystem angeschlossenen Bildwandlers, durch dessen Aufnahmefeld der auf dem Gegenstand angeordnete Codeträger in beliebiger Drehwinkel- und Breitenlage sowie in begrenztem Bereich beliebiger Höhen- und Schräglage bewegt wird.

Aus der DE-OS 32 04 021 ist bereits eine Verteileranlage für bewegte Stückgüter bekannt, bei der eine als Videokamera ausgebildete Aufnahmekamera vorgesehen ist. Zum Suchen und Auswerten der in beliebigem Drehwinkel und Breitenposition, sowie in begrenztem Bereich beliebiger Höhen- und Schräglage durch das Aufnahmefeld der Aufnahmekamera sich bewegenden Information muß immer das ganze, sich über die Fördermittelbreite und einen gewissen Längsbereich erstreckende Aufnahmefeld abgetastet werden. Es ist dabei eine große Anzahl von Daten auszuwerten, die außerhalb der Information liegen, als negativ sind. Der Rechner ist so durch eine große Zahl von nicht zutreffenden Signalen belastet, worunter die Auswertegeschwindigkeit leidet. Letztere wird zusätzlich noch dadurch beeinträchtigt, daß zur Auswertung ein stehendes Bild aufgenommen werden muß, d.h. der Gegenstand muß entweder kurz angehalten werden oder die Aufnahmekamera muß synchron mit dem sich bewegenden Gegenstand geschwenkt werden. Dadurch wird die Vorrichtung aufwendig und wartungsintensiv.

Aufgabe der Erfindung ist es daher, eine Vorrichtung der

- 2 -

0159608

eingangs genannten Gattung derart zu verbessern, daß auf einfache Weise eine hohe Auswertegeschwindigkeit und hohe Auswertegenauigkeit erreicht wird.

Diese Aufgabe wird durch die Erfindung dadurch gelöst, daß als Bildwandler ein linearer Halbleitersensor mit einer Vielzahl von Fotoelementen in einem schmalen, sich quer zur Bewegungsrichtung des Gegenstandes erstreckenden, linienförmigen Aufnahmefeld vorgesehen ist und der Codeträger einen optisch aktiven Belag aufweist.

Die mit der Erfindung erzielten Vorteile bestehen insbesondere darin, daß durch die Ausbildung des Bildwandlers als linearer Halbleitersensor und die damit verbundene linienförmige Ausbildung des Aufnahmefeldes nur ein jeweils kleiner Bereich zu erfassen ist, während die Aufnahme der Information in Längsrichtung durch die Eigenbewegung des Gegenstandes erfolgt. Ferner wird durch die Ausbildung des Codeträgers mit einem optisch aktiven Belag ein hoher Kontrasteffekt erreicht. Dadurch läßt sich die Auswertung in Länge und Breite auf das Feld des Codeträgers beschränken, und zwar unabhängig von seiner jeweiligen Lage. Den Rechner erreichen somit im wesentlichen nur informationsrelevante Daten. Infolge der auf diese Weise erzielten Bilddaten wird eine hohe Auswertgeschwindigkeit erreicht, so daß die zu kontrollierenden Gegenstände, z.B. die Stückgüter, mit hoher Geschwindigkeit das Auswertefeld passieren können. Die Vorrichtung nach der Erfindung ist somit in der Lage, die Forderung nach omnidirektionaler Erkennung von Informationen, praktisch beliebiger Ausgestaltung der Gegenstände, d.h. z.B. inhomogener Stückgüter, und hoher Objektgeschwindigkeit zu erfüllen.

Weitere Ausgestaltungen der Erfindung sind Gegenstand von Unteransprüchen.

- 3 -

Ein Ausführungsbeispiel der Erfindung ist in der Zeichnung dargestellt und wird im folgenden näher beschrieben.
Es zeigen:
Fig. 1  eine Seitenansicht der Vorrichtung;
Fig. 2  die Draufsicht auf die Vorrichtung;
Fig. 3  die Darstellung des Aufnahmebereiches;
Fig. 4  das Blockschaltbild der Bildvorverarbeitungseinheit.

Die Erfindung soll anhand einer Förderanlage zum Verteilen von Stückgütern erläutert werden, um die Stückgüter nach automatischer Erkennung einem vorbestimmten Ziel zuzuleiten. Natürlich ist die Erfindung nicht auf diese Anwendung beschränkt, sondern kann überall dort eingesetzt werden, wo ein Codeträger erkannt und infolge dieser automatischen Erkennung der Information einer vorbestimmten Behandlung unterworfen wird. In den Fig. 1 und 2 ist ein Förderband 1 o.dgl. dargestellt, auf dem als Stückgut 2 angedeutete Gegenstände transportiert werden. Das Stückgut 2 selbst kann beliebig ausgebildet sein, z.B. als verpackter oder unverpackter Gegenstand beliebiger Gestalt, wie als Karton, Sack, Beutel o. dgl.. An einer geeigneten Stelle ist am Förderband 1 eine Lesestation 3 angeordnet. Diese weist eine Beleuchtungsanlage 4 auf, durch die ein als Erkennungsfeld dienender Bereich des Förderbandes 1 gleichmäßig ausgeleuchtet wird. Zu diesem Zweck sind beiderseits mehrere Leuchtstoffröhren 5 vertikal aufgestellt und darüber mehrere Leuchtstoffröhren 5' waagerecht angeordnet. Zur weiteren gleichmäßigen Lichtverteilung dienen hinter bzw. über den Leuchtstoffröhren 5 und 5' angebrachte Reflektoren 6 und 6'. Diese können als Parabol- oder, wie dargestellt, als Polygonreflektoren ausgebildet sein.

In der Mitte zwischen den waagerechten Leuchtstoffröhren 5' bzw. deren Reflektoren 6' ist quer zum Förderband 1 eine schlitzartige Öffnung 7 vorgesehen und mittig darüber als Bildwandler ein optischer, linearer Halbleitersensor 8 angeordnet, der durch die Öffnung 7 mit Hilfe eines Objektivs

0159608

das Aufnahmefeld auf dem Förderband 1 bzw. die darin enthaltene Information erfaßt. Auf jedem Stückgut 2 ist oben, also der dem Halbleitersensor 8 gegenüberliegenden Fläche ein Codeträger 9 mit einer Information 10 angebracht. Der Codeträger 9 weist einen optisch aktiven Belag auf, z.B. aus fluoreszierendem Material, und kann entweder unmittelbar auf dem Stückgut 2 angebracht oder als Etikett ausgebildet und auf dem Stückgut 2 befestigt sein. Auf dem Codeträger 9, also dem optisch aktiven, z.B. fluoreszierenden Belag ist die Information 10 in beliebiger Ausgestaltung, verschlüsselt oder unverschlüsselt, in Kontrastfarbe und in bekannter Weise aufgedruckt bzw. aufgespritzt.

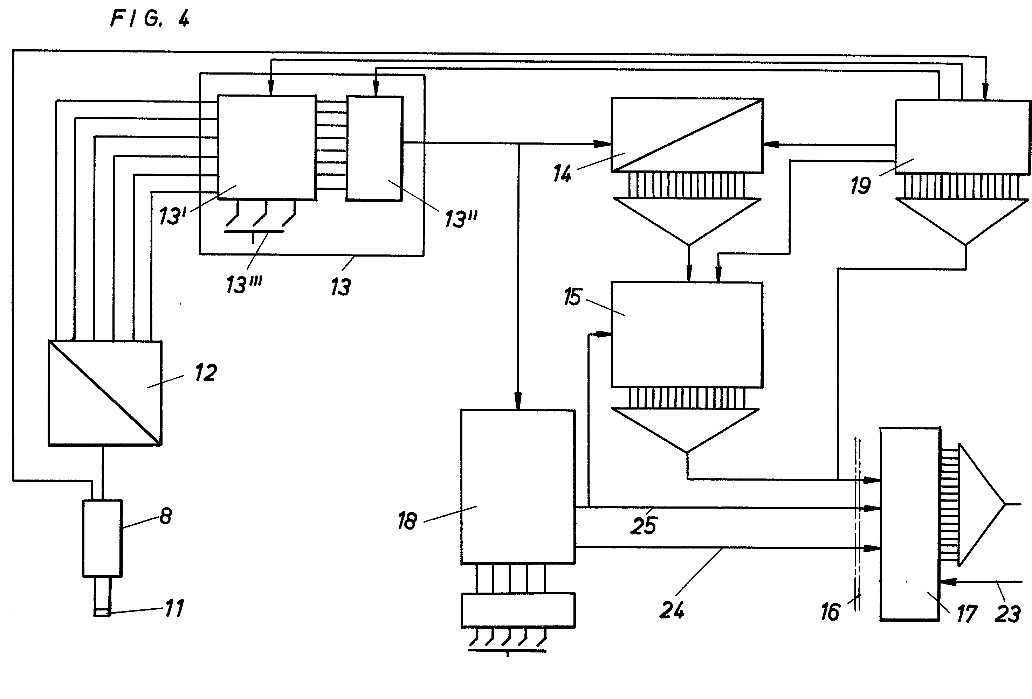

Der Bildwandler ist als linearer Halbleitersensor 8 mit z.B. 1024 Fotoelementen (Pixel) ausgebildet, dessen Objektiv ein Interferenzlinienfilter 11 vorgeordnet ist (Fig. 4). Das Interferenzlinienfilter 11 ist so konzipiert, daß nur die vom optisch aktiven Belag des Codeträgers 9 emittierte Strahlung mit einer schmalen Bandbreite des Spektralbereiches transmittiert wird. Damit ist sichergestellt, daß nur die Emissionsstrahlung des Belages des Codeträgers 9 dem Halbleitersensor 8 zugeleitet wird und Kontrastprobleme weitgehend ausgeschaltet sind, da der Hintergrund und insbesondere die Strahlung der Beleuchtungsanlage 4 ausgeblendet sind.

Dem Halbleitersensor 8 sind gem. Fig. 4 ein Analog-Digital-Wandler 12, ein Schwarz-Weiß-Generator 13, ein Seriell-Parallel-Wandler 14 und ein Pufferspeicher 15 nachgeschaltet. Letzterer ist über eine Schnittstelle 16 mit einer Anpassungsschaltung 17 und einem nicht dargestellten Rechner verbunden. Vorgesehen ist ferner ein Korrelatorbaustein 18, der nach dem Schwarz-Weiß-Generator 13 angeschlossen und auch mit dem Pufferspeicher 15 und der Anpassungsschaltung 17 verbunden ist. Weiterhin ist noch ein Zählerglied 19 vorhanden, das direkt mit dem Halbleitersensor 8, mit dem Pufferspeicher 15 und der Anpassungsschaltung 17 gekoppelt ist.

Wird ein Stückgut 2 auf dem Förderband 1 durch die Beleuchtungsanlge 4 hindurchgeführt, dann muß es auch das linienförmige, sich quer über das Förderband 1 erstreckende Aufnahmefeld 20 passieren, das in Fig. 3 strichpunktiert angedeutet ist. Sobald die vorderste Ecke oder Kante des strichpunktiert angedeuteten, in beliebiger Winkel- und Breitenlage sowie in weitem Bereich auch Höhen- und Schräglage, letzteres mindestens bis 45°, auf dem Stückgut 2 angeordneten Codeträgers 9 in das Aufnahmefeld 20 eintritt, werden die ersten Weiß-Bilder durch die emittierte Etikettstrahlung übertragen. Diese Weiß-Bilder werden vom Korrelatorbaustein 18 erkannt und dienen als Startsignal, das den nachgeschalteten Rechner zur Datenübertragung aktiviert. Da nur die Emissionsstrahlung des Codetraägers 9 den Interferenzlinienfilter 11 passieren kann, wird auch nur der Bereich des Codeträgers 9 übertragen. Die Breite des Aufnahmefeldes 20 ist z.B. auf die Breite des Förderbandes 1 abgestimmt und beträgt beispielsweise 500 mm oder 32 Rechnerworte, während die Länge des vom Aufnahmefeld 20 bestrichenen Aufnahmebereiches 21 in Transportrichtung des Stückgutes 2 eine festgelegte Zeilenzahl aufweist, die auf die maximale Länge, z.B. in Diagonalrichtung, des Codeträgers 9 abgestimmt ist und z. B. 150 Zeilen betragen kann. Es werden ferner nur die Helligkeitsstufen "Weiß" und "Schwarz" übertragen, so daß ein Binärbild entsteht.Dadurch wird eine aufwendige Suche nach dem Codeträger 9 innerhalb des Aufnahmebereiches 21 vermieden und die Zahl der zu verarbeitenden Daten auf ein Mindestmaß reduziert.

Die so in dem Halbleitersensor 8 erzeugten Signale werden im nachgeordneten Analog-Digital-Wandler 12 digitalisiert und jedem Bildpunkt ein 6-Binärwort zugeordnet, wodurch sich maximal 64 Graustufen erzeugen lassen. Mit Hilfe eines Potentiometers im Analog-Digital-Wandler 12 kann die Empfindlichkeit der Digitalisierungsschwelle eingestellt werden. Die so digitalisierten Analogwerte werden nun einer Zuordnungstabelle 13' des Schwarz-Weiß-Generators 13 zugeleitet, in der die Digitalwerte in Rubriken "Schwarz" oder "Weiß" eingeordnet werden. Durch einen externen Schalter 13''' kann die Schwelle eingestellt werden, die für die Zuordnung in eine der beiden Rubriken verantwortlich ist. Beispielsweise werden Digitalwerte in der Größenordnung von größer oder gleich dem Wert 59 dem Binärwert Eins = Weiß zugeordnet. Dagegen werden die Digitalwerte, die kleiner sind als der Wert 59 als Null = Schwarz eingestuft. Ein der Zuordnungstabelle 13' nachgeschalteter Multiplexer 13'' bündelt die so ermittelten Daten in serielle Binärsignale. Die Zuordnungstabelle 13' und der Multiplexer 13'' bilden zusammen den Schwarz-Weiß-Generator 13, in dem ein aus den Werten Null und Eins gebildetes Binärbild des Codeträgers 9 und der Information 10 hergestellt wird.

Die seriellen Binärsignale werden als Bilddaten im Seriell-Parallel-Wandler 14 in parallele, z.B. 16-Bit-Worte gewandelt und so in den Pufferspeicher 15 übertragen, der als Puffer dient. Die weitere Übertragung dieser Binärsignale in den Rechner wird durch den Korrelatorbaustein 18 gesteuert, der den Startzeitpunkt der Datenübertragung bestimmt. Die Datenübertragung beginnt, sobald über eine Leitung 23 (Fig. 4) vom Rechner ein Signal zur Aktivierung der Anpassungsschaltung 17 eingegangen und über eine Leitung 24 ein Synchronisationssignal vom Korrelatorbaustein 18 an die Anpassungsschaltung 17 ergangen ist. Das Synchronisationssignal erfolgt wiederum, wenn Digitalwerte mit "Weiß" vom Schwarz-Weiß-Generator 13 geliefert werden, was bedeutet, daß der Halbleitersensor 8 den Codeträger 9 erfaßt hat.

Die Übertragung der Daten vom Korrelatorbaustein 18 und der Anpassungsschaltung 17 werden ferner durch eine Quittierleitung 25 überwacht. Das Zählerglied 19 zählt während der Datenübertragung diejenigen Digitalwerte, die einen genügenden Weißanteil besitzen. Dadurch wird die nachgeschaltete Auswertezeit des Bitmusters verkürzt, da die Winkellage des Codeträgers 9 schnell erkannt wird. Das Stoppsignal für die Datenübertragung erfolgt vom Rechner. Die durch obige Maßnahmen erreichte definierte Datenübertragung bedeutet eine Datenreduktion und ermöglicht somit eine schnelle Datenverarbeitung.

Das Erkennungssystem ist als Gesamtsystem anzusehen, bei dem die verschiedenen Komponenten, wie Beleuchtung, optisch aktiver Belag, Interferenzlinienfilter und Halbleitersensor, aufeinander abgestimmt sind. Der physikalische Effekt der Frequenzverschiebung durch die kurzwelligere Strahlungsemission der Leuchtstoffröhren und die Umwandlung der Strahlung in einen langwelligeren Spektralbereich innerhalb des optisch aktiven Belages des Codeträgers 9 wird ausgenutzt, um die Kontrastprobleme auszuschalten und somit nur informationsrelevante Bilddaten zu verarbeiten.

Patentansprüche:

1. Vorrichtung zum automatischen Lesen von auf einem Codeträger aufgebrachten Informationen auf bewegten Gegenständen, insbesondere auf Stückgut, mittels eines an ein
Auswertesystem angeschlossenen Bildwandlers, durch dessen
Aufnahmefeld der auf dem Gegenstand angeordnete Codeträger in beliebiger Drehwinkel- und Breitenlage sowie
in begrenztem Bereich beliebiger Höhen- und Schräglage
bewegt wird, dadurch gekennzeichnet, daß als Bildwandler
ein linearer Halbleitersensor (8) mit einer Vielzahl
von Fotoelementen in einem schmalen, sich quer zur Bewegungsrichtung des Gegenstandes (2) erstreckenden,
linienförmigen Aufnahmefeld (20) vorgesehen ist und der
Codeträger (9) einen optisch aktiven Belag aufweist.

2. Vorrichtung nach Anspruch 1, dadurch gekennzeichnet,
daß der Optik des Halbleitersensors (8) ein Interferenzlinienfilter (11) vorgeschaltet ist, der nur die vom
optisch aktiven Belag des Codeträgers (9) emittierte Strahlung dem Halbleitersensor (8) zuleitet und so
nur den charakteristischen Anteil der Spektralverteilung
durchläßt.

3. Vorrichtung nach Anspruch 1 oder 2, dadurch gekennzeichnet, daß zum Ausleuchten des Aufnahmefeldes (20) eine
Beleuchtungsanlage (4) mit beiderseits und darüber angeordneten Leuchtstoffröhren (5, 5') vorgesehen ist, denen
Reflektoren (6, 6') zur gleichmäßigen Lichtverteilung
zugeordnet, die zur Anregung des optisch aktiven Belages
des Codeträgers (9) ausgelegt und die auf den charakteristischen Spektralbereich des optisch aktiven Belages
abgestimmt sind.

4. Vorrichtung nach mindestens einem der Ansprüche 1 bis 3,
dadurch gekennzeichnet, daß der optisch aktive Belag
des Codeträgers (9) auf einem Etikett oder direkt auf
dem Gegenstand (2) aufgebracht ist.

5. Vorrichtung nach mindestens einem der Ansprüche 1 bis 4,
dadurch gekennzeichnet, daß dem Halbleitersensor (8)
ein Analog-Digital-Wandler (12) und diesem ein Schwarz-
Weiß-Generator (13) nachgeschaltet sind, an dem ein
Schalter (13') zum Einstellen der Schwelle zwischen
"Weiß" und "Schwarz" vorgesehen ist.

6. Vorrichtung nach mindestens einem der Ansprüche 1 bis 5,
dadurch gekennzeichnet, daß nach dem Schwarz-Weiß-Generator (13) ein Seriell-Parallel-Wandler (14) und ein
Pufferspeicher (15) angeordnet sind, dem ein Korrelatorbaustein (18) zum Abrufen der zwischengespeicherten
Daten zugeordnet ist, das als elektronisches Koppelelement ausgebildet ist, welches nur die erkennungsrelevanten Bilddaten erkennt und dem nachgeschalteten
Rechner aus dem Pufferspeicher (15) übermittelt.

0159608

7.  Vorrichtung nach mindestens einem der Ansprüche 1 bis 6, dadurch gekennzeichnet, daß ein Zählerglied (19) zum Zählen der Bildzeilen mit genügendem Weißanteil vorgesehen ist.

8.  Vorrichtung nach mindestens einem der Ansprüche 1 bis 7, dadurch gekennzeichnet, daß die Breite des Aufnahmefeldes (20) etwa 1024 Fotoelemente bzw. 500 mm beträgt.

9.  Vorrichtung nach mindestens einem der Ansprüche 1 bis 8, dadurch gekennzeichnet, daß der vom Aufnahmefeld (20) in Transportrichtung des Gegenstandes (2) bestrichene Aufnahmebereich (21) auf die maximale Länge des Codeträgers (9) abgestimmt ist und z.B. 150 Zeilen beträgt.

0159608

F I G. 1

F I G. 2

F I G. 3

FIG. 4